Europäisches Patentamt

(19) European Patent Office

Office européen des brevets

(11) EP 0 757 974 A1

(12) EUROPEAN PATENT APPLICATION
published in accordance with Art. 158(3) EPC

(43) Date of publication:
12.02.1997 Bulletin 1997/07

(21) Application number: 95909994.6

(22) Date of filing: 27.02.1995

(51) Int. Cl.$^6$: **C04B 33/02**, B32B 18/00

(86) International application number:
PCT/JP95/00299

(87) International publication number:
WO 96/26909 (06.09.1996 Gazette 1996/40)

(84) Designated Contracting States:
BE DE FR GB IT

(71) Applicant: TORAY INDUSTRIES, INC.
Tokyo 103 (JP)

(72) Inventors:
• SHIMIZU, Hisao
Shiga 520 (JP)
• OTANI, Mitsunobu
Shiga 520 (JP)
• NODA, Yukio
Osaka 567 (JP)

• KIMURA, Hajime
Shiga 520-21 (JP)
• MURATA, Shigekazu
Shiga 520-05 (JP)
• UEDA, Teruki
Shiga 520-23 (JP)

(74) Representative: Coleiro, Raymond et al
MEWBURN ELLIS
York House
23 Kingsway
London WC2B 6HP (GB)

(54) **THIN FLAT CERAMIC PLATE AND METHOD OF MANUFACTURING THE SAME**

(57) A thin ceramic plate which is a ceramic plate consisting of a multilayered calcined sheet with at least a 3-layer construction comprising a ceramic material as the major component, wherein the majority of the layers of the layered construction have a layer thickness of 0.05-3 mm and have substantially different ceramic material compositions, with at least one pair of adjacent layers having thermal expansion coefficients adjusted to differ by no more than $2 \times 10^{-6}$/°C.

Even at low thicknesses of 2-10 mm and large-sized dimensions of 100 cm and greater, such plates have excellent properties, including virtually no warping or other deformity, excellent flatness, water absorption of 0.5-10% and flexural strength of 350 kg/cm$^2$ or greater.

The thin ceramic plate has high industrial value since it may be applied for a wide range of uses, including interior and exterior building materials, flooring materials, furniture, household goods such as washstand counters and kitchen utensils, top plates and counters for testing benches, various interior goods, materials for civil engineering such as inner panels for tunnels, for tourism-related purposes such as guide boards and signboards, and artistic painting.

**Description**

Technical Field

The present invention relates to a thin ceramic plate and a process for producing it, and more specifically, it relates to a novel thin ceramic plate prepared by producing slurry containing a ceramic raw material as the main component, and then forming it into a sheet-like mold by a sheet-forming method and calcining the mold, as well as to a production technique therefor.

The present invention particularly relates to a thin ceramic plate with large dimensions, having excellent strength characteristics, impact resistance and dimensional precision even when thin and light, as well as excellent flatness as a plate, and which is suitable for use as outer walls, inner walls and floors for architecture, wall materials for civil engineering, such as inner tunnel panels, flat materials for room furnishings including furniture, tables, medical testing bench tops, etc., and signboards and artistic paintings for roads and maps used at parks and amusement sites, as well as to a process for its production.

Background Art

Recent years have seen considerable expansion in the market for large-dimension ceramic plates. Large-sized ceramic plates must be lightweight to facilitate their handling and working, and they are usually produced in the form of thin plates.

However, when ceramic plates are prepared as thin plates to achieve lighter weight, such ceramic plates must also have sufficient high strength characteristics against external impact, as well as satisfactory dimensional precision free of warping and other deformities.

Thin ceramic plates can be produced by using sheet-forming methods, an example of which is proposed in Japanese Examined Patent publication No. 60-3038. Specifically, in this method a slurry containing a material body powder and fiber material as essential components is formed into a sheet to prepare a precursory ceramic plate sheet having a desired moisture content while another slurry containing glaze and fiber material as essential components is formed into a sheet to prepare a glazed sheet having a desired moisture content, after which the two sheets are laid together and integrated using a roll press machine, and finally calcined.

The present inventors have already proposed a process for producing a multilayered ceramic plate prepared by sheet-forming slurry comprising raw ceramic powder, fiber material and a binder component to produce thin sheets, layering the necessary number of these prepared sheets, and then applying pressure to the whole to integrate the prepared sheets and calcining the resulting laminate to give a calcined sheet with a uniform composition (Japanese Unexamined Patent Publication No. 6-144914).

However, even though the ceramic plates obtained by these processes may be said to be improvements over the prior art in terms of their excellent strength and lack of warping and other deformities, they have still not completely satisfied recent goals of the industry which may be summarized as follows.

That is, in addition to the greater performance and functionality demanded of ceramic plates in recent years, ceramic plates are also required to have a wide range of quality and characteristics to meet a wide range of uses in the field.

There has also existed a need for low-cost production processes which allow these demands to be sufficiently met.

Particularly important are the thin and lightweight properties, but equally so the realization of high-value large-sized ceramic plates having these properties, as well as the realization of large-sized thin ceramic plates with the added value of various additional functions while maintaining sufficient flatness with substantially no deformities such as warping and bending.

From the standpoint of realizing ceramic plates with the added value of high functionality, mere sheet-forming methods of the prior art and production of ceramic plates by the process described in Japanese Unexamined Patent Publication No. 6-144914 described above are not adequate, and particularly the technical concept of obtaining thin ceramic plates with specific functions actively added has not existed in the prior art techniques.

It is an object of the present invention to provide a thin ceramic plate with large dimensions, having excellent strength characteristics, impact resistance and dimensional precision even when thin and light, and also having excellent flatness, to provide suitability for use in outer walls, inner walls and floors for architecture, wall materials for civil engineering, such as inner panels for tunnel, flat materials for room furnishings including furniture, tables, medical testing bench tops, etc., and signboard materials for roads and maps used at parks and amusement sites, as well as a process for its production.

Disclosure of the Invention

The thin ceramic plate of the invention designed to achieve the aforementioned object is characterized by being a ceramic plate consisting of a multilayered calcined sheet with at least a 3-layer construction comprising a ceramic material as the major component, and the ceramic plate has a water absorption of 0.5-10%, a longitudinal flexural strength of 350 kg/cm$^2$ or greater and a lateral flexural strength of 350 kg/cm$^2$ or greater, with the majority of the layers of the layered construction having a layer thickness of 0.05-3 mm and having substantially different ceramic material compositions, and the adjacent layers of the multiple layer construction having thermal expansion coefficients which differ by less than 2 x 10$^{-6}$/°C.

The process used to produce the thin ceramic plate of the invention is a thin ceramic plate producing process characterized by comprising the following 4 steps (a) through (d):

(a) a step of combining a raw ceramic powder, a fiber material and a thermoplastic organic material with a glass transition point not exceeding 10°C, and preparing at least 2 different types of slurry to form multiple layers in the ceramic plate obtained in step (d) described below, with substantially different ceramic material compositions and thermal expansion coefficients which differ by less than 2 x 10$^{-6}$/°C,

(b) a step of sheet-forming each of the slurries obtained in step (a) above to make molded sheets,

(c) a step of laminating the multiple molded sheets obtained in step (b) to make a pressure-integrated multilayer structure with at least 3 layers, and

(d) a step of calcining the pressure-integrated multilayer structure obtained in step (c) to make a ceramic plate.

Since the thin ceramic plate of the invention with the construction described above consists of a multilayer structure of different molded sheets with substantially different ceramic material compositions and thermal expansion coefficients which differ by less than 2 x 10$^{-6}$/°C, an effect is provided whereby external stress is absorbed and dispersed at the interface between the calcined sheets, thus resulting in improved impact resistance.

Also, since during production the laminate is calcined after laminating the necessary number of molded sheets which have post-calcining thermal expansion coefficients differing by less than 2 x 10$^{-6}$/°C and substantially different compositions, the compositions may be varied to adjust the degree of thermal contraction between each layer during the calcining process for each molded sheet, the stress generated in each calcined sheet after calcining may be controlled, and consequently the flexural strength of the thin ceramic plate as a whole may be increased while also reducing warping and other deformities.

In addition, since the raw slurry for each molded sheet contains an organic material with a glass transition point of 10°C or below, the molded sheets obtained prior to calcining are flexible and thus during lamination the molded sheets have good mutual adhesion (compression integration).

Furthermore, in the process for producing a thin ceramic plate according to the invention, the layered construction of the molded sheets used may be modified as desired to allow realization of different characteristics and constructions in order to meet a wide variety of needs.

Any desired design effect may also be provided by adding coloring agents to the surface layer of the molded sheet or giving particular patterns onto the surface layer.

The thin ceramic plates of the invention are suitable for a wide range of uses, including outer walls, inner walls and floors for architecture, wall materials for civil engineering, such as inner tunnel panels, flat materials for room furnishings including furniture, tables, medical testing bench tops, etc., and signboard materials for roads and maps used at parks and amusement sites. It is particularly suited for these uses because the surface is dense and hard and therefore resists water absorption and damage, it has good heat and chemical resistance, high durability due to its high strength and frost resistance, and good manageability, processability and workability since it is thin and light even when large-sized; it also has very excellent flatness and smoothness with virtually no warping or other deformities, and is therefore suited for printing and painting, while the excellent adhesion on its back side facilitates composite working with other materials.

Best Mode for Carrying Out the Invention

The thin ceramic plate and production process for the thin ceramic plate according to the invention will now be explained in more detail.

Specifically, a thin ceramic plate according to the invention is prepared by laminating at least 3 layers of molded sheets made by sheet-forming slurry in a manner to be described later, contact bonding the molded sheets together by applying pressure to the laminate for its integration, and then calcining the whole laminate, which results in calcining of each molded sheet and removal of the organic material, thus converting it into a calcined sheet composed primarily of ceramic material.

Here, at least 2 of the laminated molded sheets, once they are calcined to obtain the calcined sheet, have thermal expansion coefficients differing by less than 2 x 10$^{-6}$/°C and substantially different compositions, and specifically the formation may involve adjusting the slurry material composition and the type and particle distribution of the ceramic material which is the major component of the slurry.

Consequently, the thin ceramic plate of the invention has a construction comprising at least 3 layers of calcined sheets.

Also, at least 2 of the calcined sheets among the 3 or more layers have different thermal expansion coefficients.

Furthermore, by appropriately combining layers with different water absorptions, softening temperatures and other characteristics, it is possible to obtain various desired characteristics for the thin ceramic plate.

In other words, the thin ceramic plate of the invention is characterized by being a ceramic plate prepared as a multilayered calcined sheet with at least a 3-layer construction comprising a ceramic material as the major component, and the ceramic plate has a water absorption of 0.5-10%, a longitudinal flexural strength of 350 kg/cm$^2$ or greater and a lateral flexural strength of 350 kg/cm$^2$ or greater, with the majority of the layers of the layered construction having a layer thickness of 0.05-3 mm and having substantially different ceramic material compositions, and the adjacent layers of the multiple layer construction having thermal expansion coefficients which differ by less than 2 x 10$^{-6}$/°C.

Furthermore, as a preferred form of the thin ceramic plate according to the invention, the entire thickness is 2-10 mm, the water absorption rates of the front side and back side of the ceramic plate are adjusted to different degrees, the softening temperatures of the front side and back side of the ceramic plate are adjusted to different temperatures, and a coloring material is also combined with the surface layer to provide additional function and decorative appearance.

In addition, the process for producing the thin ceramic plate of the invention is characterized by comprising the following 4 steps: (a) a step of combining a raw ceramic powder, a fiber material and a thermoplastic organic material with a glass transition point not exceeding 10°C, and preparing at least 2 different types of slurry to form multiple layers in the ceramic plate obtained in step (d) described below, with substantially different ceramic material compositions and thermal expansion coefficients which differ by less than 2 x 10$^{-6}$/°C, (b) a step of sheet-forming each of the slurries obtained in step (a) above to make molded sheets, (c) a step of laminating the multiple molded sheets obtained in step (b) to make a pressure-integrated multilayer structure with at least 3 layers, and (d) a step of calcining the pressure-integrated multilayer structure obtained in step (c) to make a ceramic plate.

According to the aforementioned process of the present invention, preferably at least 2 layers of the pressure-integrated multilayer construction have different sintering peak temperatures, and thus by appropriately adjusting the calcining temperature within the range between the two sintering peak temperatures, the characteristics of the multiple layers such as water absorption, strength and density may be adjusted as desired, to obtain a ceramic plate with the overall desired characteristics.

At least 2 of the molded sheets are preferably selected so as to have thermal expansion coefficients which differ by less than 2 x 10$^{-6}$/°C when calcined into calcined sheets, while also having substantially different compositions, and these 2 layers with thermal expansion coefficients which differ by less than 2 x 10$^{-6}$/°C are preferably layered adjacently.

The sheets may be prepared by adjusting the slurry material composition and the type and particle distribution of the ceramic material which is the major component of the slurry, as described in detail below.

In the calcining process during production of the thin ceramic plate of the invention, the laminated molded sheets contract by their calcining shrinkage rate depending on the composition and calcining conditions, and upon completion of calcining and cooling, each of the layers contract according to their respective thermal expansion coefficient values. Here, a large thermal expansion coefficient often similarly corresponds to a large degree of shrinkage, and generally despite a calcining shrinkage rate of a few percent or more the coefficient of shrinkage during cooling is as small as 1% or less.

However, since each of the molded sheets exhibits fluidity at the maximum temperature during calcining, even with a slight difference in calcining shrinkage little intrinsic strain occurs at the interface between the calcined sheets, resulting in less influence on the generation of warping. Nevertheless, in terms of the thermal expansion coefficients, if the difference in thermal expansion coefficients of the adjacent calcined sheets is large, a large degree of deforming stress is generated at the interface between the 2 calcined sheets, resulting in interlayer peeling and cracking, while the difference in shrinkage rates between layers is also a cause of warping.

Consequently, the difference in the thermal expansion coefficients of the adjacent layers is an important factor.

In other words, with the thin ceramic plate of the invention, the thermal expansion coefficients of at least one pair of adjacent structural layers are adjusted within a specific range, which is most importantly less than 2 x 10$^{-6}$/°C, and preferably less than 1 x 10$^{-6}$/°C.

A thin ceramic plate of the invention adjusted in this manner disperses externally applied impact forces in the direction of the interface, thus helping to prevent cracks along the direction of thickness of the thin ceramic plate, and fewer cracks means a higher degree of flexural strength.

Furthermore, even when cracks are generated due to strong impact, cracking along the entire direction of the thickness is minimized for the same reason described above, to thus help prevent breakage of the whole plate.

In other words, according to the invention it is possible to produce a flat, thin, light, easily workable ceramic plate with excellent flexural strength and impact strength.

Also, when 2 molded sheets with different post-calcining thermal expansion coefficients are calcined after contact bonding, the layers whose thermal expansion coefficients are lowered in the calcining process undergo compressive stress, while the layers whose thermal expansion coefficients are increased undergo tensile stress. In addition, the two stresses in different directions reside inside the thin ceramic plate of the invention, and this residual stress, particularly the residual compressive stress, provides the thin ceramic plate of the invention with a resistive force against bending, and therefore from this viewpoint as well an effect is achieved of even further improved strength against bending.

Thus, by providing appropriate differences in thermal expansion coefficients of the adjacent calcined sheets, it is possible to optimize the various generated stresses to minimize warping and other deformities in the resulting ceramic plate, while also vastly increasing the strength of the ceramic plate itself.

There must be at least one pair of adjacent structural layers with the specific thermal expansion coefficients specified above, and preferably the construction includes multiple such pairs, and more preferably a majority of adjacent layers wherein the difference is less than $2 \times 10^{-6}/°C$.

With this in mind, the adjacent calcined sheets preferably have thermal expansion coefficient differences adjusted to within less than $2 \times 10^{-6}/°C$, and more preferably less than $1 \times 10^{-6}/°C$.

If the difference in thermal expansion coefficients is greater than $2 \times 10^{-6}/°C$, interlayer peeling and cracking become more likely during the calcining process, causing more warping and other deformities. The impact resistance characteristics are improved with smaller thermal expansion coefficient differences, becoming even so small as to be considered essentially equal.

In order to adequately exhibit the effect based on the difference in thermal expansion coefficients, the lower limit for the differences is preferably set to $0.2 \times 10^{-6}/°C$.

Also, according to the invention the thermal expansion coefficient of the entire calcined body is preferably adjusted to $7 \times 10^{-6}/°C$, and if possible lower than $6 \times 10^{-6}/°C$.

This will minimize cooling cracks during the cooling process, reduce warping and other deformities, and improve the strength, impact resistance and thermal impact resistance. An additional advantage is that the cooling rate may increased during the calcining process, for more efficient calcining.

The thermal expansion coefficients may be adjusted by changing the ceramic material composition and particle distribution, as explained below. In this case, the amount of alkali metal oxides which increase the thermal expansion coefficient is preferably adjusted to less than 7 wt%, and especially less than 6 wt%, of the ceramic material, while the amount of residual crystalline quartz at the prescribed calcining temperature is preferably adjusted to less than 10 wt%.

The thin ceramic plate of the invention is produced as a multilayered laminate of the above-mentioned calcined sheets. The number of layers may be appropriately selected depending on the desired impact resistance and other characteristics to be mentioned later, but it must be at least three.

According to the invention, 4 layers are particularly suitable, and 5 layers or more are preferred. More deformation and warping tend to occur with a two-layer structure, and the desired impact resistance cannot be achieved.

With a greater number of laminated layers, it is easier to accomplish a balance between strain and stress. When molded sheets with the same composition are adjacently placed in the multilayer laminated structure, they are counted as a single layer according to the invention.

With a greater number of such layers of calcined sheets, the uniformity of the entire ceramic plate is increased, while the shrinkage of the molded sheets during the calcining process is also more uniform, thus providing the advantage of less warping, strain, etc. in the ceramic plate after calcining, and greater overall strength.

For this reason, the number of layers should be 3 or more, preferably 4, and more preferably 5 or more.

Nevertheless, an excessive number of layers makes uniform pressure treatment difficult during application of pressure to the laminated molded sheets as described later, rendering it more difficult to achieve integration of the molded sheets as a whole, and since the production equipment is also a factor to be considered, the maximum should generally be about 50 layers, and in view of the present state of the art a maximum of 20 layers is more realistic.

The thickness of the calcined sheets in the thin ceramic plate of the invention may be appropriately chosen depending on the relation between the thickness and characteristics of the ceramic plate to be produced, but a majority of the layers in the laminate are preferably in the range of 0.05 and 3 mm, and more preferably 1 to 2 mm.

According to the invention, a thickness of less than 0.05 mm for each of the constituent layers tends to complicate efforts to produce a homogenous sheet, because mixture among the components during the calcining process sometimes results in substantial loss of layers, thus impeding the characteristics and function of those layers.

Conversely, when the thickness of each constituent layer is greater than 3 mm, a greater stress strain is generated, making it more difficult to achieve a balance in the stress generated in each layer, and complicating multilayer lamination in the thin plate.

The thicknesses of the calcined sheets may be either the same or different.

The thicknesses of the calcined sheets obtained here are determined on the basis of the thicknesses of the molded sheets used.

The thin ceramic plate of the invention preferably has a total calcined thickness of 2 to 10 mm, and more preferably 3 to 8 mm.

According to the invention, a total calcined thickness of less than 2 mm makes it difficult to achieve a balance in the stresses generated in each layer of the molded sheets, leading to more warping, deformity and cracking.

Also, if the total calcined thickness is greater than 10 mm, it obviously becomes more difficult to achieve the original object of the invention which is that of a thin plate, while uniform thermal decomposition of the organic materials contained in the molded sheets during the calcining process for their removal as gases is also more difficult, and interlayer peeling, warping and other deformities are more easily generated.

Uniform cooling during the cooling process also becomes rather difficult, tending to result in more cracking, warping and other deformities.

A major feature of the ceramic plate of the invention is its ability to be made to large dimensions, and in concrete terms it is comparatively easy to produce plates which are as large as 60 cm or more lengthwise and widthwise, or 100 cm or more, and even a few meters, lengthwise and widthwise.

The total thickness of the molded sheets may be adjusted by appropriate selection of the slurry composition and sheet-forming conditions.

A desired number of thin molded sheets of the same composition may also be laminated and used as a molded sheet of the desired thickness having that composition.

The laminated structure of the calcined sheets is appropriately selected according to the relation between types and directions of external stress which will be placed on the thin ceramic plate.

Examples include alternate lamination of calcined sheets with different thermal expansion coefficients, and successive lamination of calcined sheets so that the thermal expansion coefficients either gradually increase or decrease from the surface toward the direction of the thickness; particularly, an arrangement wherein calcined sheets with different thermal expansion coefficients are laminated in a symmetrical manner in the direction of thickness is preferred because it does not induce warping or deformity.

In cases where, in terms of the thermal expansion coefficients, the layers are asymmetrically laminated in the direction of thickness, i.e. physically around the center at 1/2 the thickness of the calcined sheet, adjustment of the thickness of each layer and adjustment of the distance from the center will allow adjustment of the moment, to provide a thin ceramic plate with essentially no warping.

In order to increase resistance to external impact stress, it is generally preferable to place the calcined sheet with the smaller thermal expansion coefficient as the surface layer to direct the residual compression stress on the surface layer. For external bending stress, the preferred construction has the calcined sheet with the smaller thermal expansion coefficient placed where tensile stress is generated by the bending stress, to direct the residual compressive stress there.

As clearly explained above, a thin ceramic plate of the invention with improved uniformity of structure and adjusted differences in thermal expansion coefficients of the adjacent layers has roughly the same strength in the lengthwise and widthwise directions, little fluctuation in strength, and a high strength of at least 350 $kg/cm^2$, and about 800 $kg/cm^2$ - 1000 $kg/cm^2$.

According to the invention, the advantage of high strength characteristics is achieved without using special high-grade raw materials, and therefore cheap raw materials from recycled industrial wastes, for example, may also be suitably used.

The thin ceramic plate of the invention may be constructed with layers such that the water absorption on one surface layer differs from that of the other surface layer. Ceramic plates normally have one surface exposed, with the other surface adhered to a backing.

Since the layer exposed to the outside (hereunder referred to as the front layer) becomes contaminated with absorption of moisture and undergoes frost damage, it preferably has a low water absorption, while the layer adhered to the backing, etc. (hereunder referred to as the back layer), which requires adhesion, preferably has higher water absorption.

The thin ceramic plate of the invention employs a multilayer construction in order to satisfy the reciprocal required properties of the front layer and back layer, as well as to provide different water absorption rates between the front layer and back layer.

The water absorption of each layer is appropriately determined for different uses, working methods and post-processing conditions.

Generally, the water absorption of the front layer is preferably as low as possible, not exceeding 2%, and preferably 1% or lower.

Since lowering the water absorption increases the density, the contamination resistance and frost resistance as well as the damage and abrasion resistance are improved, and polishing can provide a glossy surface for a new decorative appearance.

The water absorption of the back layer is preferably set to at least 2%. At less than 2% there is reduced adhesion with adhesives or cement. The water absorption of the intermediate layer consisting of at least one calcined sheet should be no greater than 5%, and preferably no greater than 3%, from the viewpoint of the strength and frost resistance of the thin ceramic plate.

Furthermore, the difference in the water absorption of adjacent layers may be adjusted to 1% or greater. If the difference is less than 1%, management of the composition during production tends to be more complicated. If the difference is excessively large, however, warping occurs and the balance in properties is destroyed, and therefore it should be no greater than 5%, and preferably no greater than 3%.

Each of the layers of the thin ceramic plate of the invention has a water absorption set to within the ranges mentioned above, for a total water absorption of 0.5-10%, and preferably 5% or less.

The thin ceramic plate of the invention having desired water absorption properties is obtained by calcining a molded sheet consisting of at least 3 layers with different sintering peak temperatures, at a prescribed calcining temperature.

The sintering peak temperature according to the invention is determined by calcining the molded sheet at different temperatures, measuring the water absorption of the resulting calcined body by the method described later, calculating the change in water absorption during the calcining process, and determining the calcining temperature at which the water absorption is essentially zero.

When the calcining temperature is increased while calcining the above-mentioned molded sheet, the thermal decomposition products in the mold decompose at their respective decomposition temperatures and escape as gases, while the mold is softened at the same time, increasing its fluidity and causing it to thermally contract to a greater density.

Here, the higher the calcining temperature is, the greater the degree of density is induced. Also, upon completion of the sintering, the open fine pores on the surface of the mold become closed, giving the surface a dense structure which is almost non-porous.

Consequently, with this surface condition the resulting calcined body is rendered essentially non-water-absorbent, and the water absorption is observed to be zero.

Thus, the front layer is a layer with a low sintering peak temperature while the back layer is a molded sheet with a high sintering peak temperature, and the calcining is preferably carried out at a temperature above the lower sintering peak temperature but below the higher sintering peak temperature; therefore, by proper selection of the calcining temperature it is possible to appropriately vary the water absorption values of the front layer and back layer.

At this calcining temperature, the calcined sheet converted from the molded sheet with the relatively low sintering temperature usually has relatively low viscosity with a large degree of drip down, but since the structure is dense, the water absorption is low and the strength is high.

On the other hand, the calcined sheet converted from the molded sheet with the relatively high sintering temperature has relatively high viscosity with a small degree of drip down, but because it is relatively coarse the water absorption is high and the strength is relatively low.

Consequently, by calcining a laminate of at least two multiple layers with different sintering peak temperatures at a temperature higher than the lower sintering peak temperature and lower than the higher sintering peak temperature, it is possible to achieve different desired characteristics, including density and strength.

Thus, the thin ceramic plate of the present invention is lightweight while exhibiting functions as a thin ceramic plate with excellent strength and impact resistance.

The difference in sintering peak temperatures is preferably adjusted to be within 50°C.

The sintering peak temperatures of the molded sheets are determined by the composition and particle distribution of the ceramic material, the slurry composition, the calcining conditions, etc.

When a molded sheet with a high calcining shrinkage rate is used, the water absorption is generally lower due to the relative denseness of the calcined sheet obtained upon calcining, and conversely when the calcining coefficient of shrinkage is low, the coarseness of the resulting calcined sheet gives a high water absorption.

Thus, the front layer may be made of a molded sheet with an increased calcining shrinkage rate during calcining, and the back layer may be made of a molded sheet with a reduced calcining shrinkage rate.

Less warping normally tends to occur if the difference in calcining coefficient of shrinkage is adjusted to within 5%, and preferably within 3%.

The layered construction of the thin ceramic plate of the invention is selected based on the desired water absorption characteristics for the purpose of use.

For example, layers with different water absorptions may be alternately layered, or the layers may be laminated in the direction of thickness in the order of their water absorption. In cases of a large difference in water absorption between the front layer and the back layer the number of layers is preferably increased and placed so that the water absorption changes in graded degrees.

A particularly preferred construction is one in which calcined sheets with different water absorptions are laminated in a symmetrical manner in the direction of thickness, because it does not induce warping or deformity.

The thin ceramic plate of the invention may also have a multilayer construction consisting of at least 3 layers of calcined sheets with different softening temperatures.

By placing layers with different softening temperatures for at least the front layer and back layer, arranging them so that the softening temperature of at least the front constituent layer is lower than the softening temperature of the inner adjacent layer, and conducting the calcining at a temperature above the lower softening temperature of the front and below the softening temperature of the back constituent layer, it is possible to prevent wavy irregular deformation of the front, and since the surface is dense and therefore has low water absorption the functions depending on the water absorption of the surface, i.e. contamination resistance, frost resistance, damage resistance, etc. may be improved.

In the past, for example, molded sheets transported over a roller-hearth kiln during the calcining process have been calcined at near the sintering temperature, to promote heat shrinkage of the molded sheets.

However, heating a molded sheet at its sintering temperature causes the molded sheet to be transported in a softened state, and thus if the kiln temperature varies even slightly, the molded sheet drips down under its own weight causing wavy irregularities on the surface of the calcined sheet.

In other words, it is reasonable to assume that when the ceramic plate during calcining reaches the softening temperature of the layer with the lower softening temperature, despite the strength loss in the layer with the lower softening temperature, it is supported by the strength of the layer with the higher softening temperature, and therefore drip down is prevented, thus promoting densification.

Thus, by arranging the layer with the lower softening temperature as the front layer and the layer with the higher softening temperature as the back layer, i.e. as the layer in contact with the roller, an effect is provided which minimizes generation of wavy irregularities in the surface of the ceramic plate.

The difference in the softening temperatures of the front layer and back layer is generally preferred to be within 300°C. Also, the difference in the softening temperature of each layer constituting the intermediate layer which consists of at least one layer is preferably adjusted to be at least 10°C.

A difference in softening temperature of less than 10°C results in significant problems during production, making it difficult to achieve the desired effect.

If the difference in softening temperatures is too great, however, the balance between the properties of each of the layers of the ceramic plate is lost.

According to the invention, the major component of the ceramic plate is any one or a mixture of inorganic substances selected from kaolin, various clays, porcelain stone, quartzite, tabular spar, feldspar, dolomite, alumina, zirconia, fly ash, aplite, fragmented rock, limestone, talc, wollastonite, and the like.

For adjustment of the thermal expansion coefficient, for example, the alkali metal oxide content of the entire calcined body is preferably adjusted so as not to exceed 7 wt%, and the crystalline quartz content adjusted so as not to exceed 10 wt%.

In addition, various chemicals may also be added in order to modify the properties such as sintering peak temperature and softening temperature, improve the quality and performance of the ceramic plate, and facilitate the steps of production.

Below are described methods for measuring the thickness of the layers constituting the thin ceramic plate of the invention, and for taking samples.

First, the ceramic plate is immersed in a dyeing immersion solution (according to JIS Z2343) for 5 minutes and the immersion solution adhering to the surface is removed by washing with water.

Since at least the porous structure differs between each layer of calcined sheets, differences in shades of the dye appear in each layer due to the difference in porous structure. The borders between the layers can be distinguished by magnified observation of the boundaries between the shades using, for example, a microfiberscope.

If the difference in the porous structures of adjacent layers is too small to allow distinction of the shades of the dye, an EPMA (electron probe X-ray microanalyzer) may be used to measure the difference in composition of each layer to distinguish the boundary.

In cases where the components of adjacent layers are mutually diffused creating a non-linear boundary, the thickness is measured from the center between those layers.

The aforementioned thermal expansion coefficient is the value calculated in the following manner.

That is, after distinguishing each layer of the ceramic plate by the method described above, a planar grinding machine is used to take a sample by carefully abrading and removing all the layers except for the calcined sheet to be measured. The grinding wheels of the grinding machine are in the range of about 50 mesh to 2000 mesh, and are used as appropriate for the thickness of each layer.

The sample (having a length at room temperature designated by $l_0$) is set in a commercially available push-rod differential thermal expansion meter, the sample is heated from room temperature ($t_0$°C) to a prescribed temperature ($t$°C), and the sample length ($l$) is then measured, after which the mean thermal expansion coefficient $\alpha$ is calculated from the following equation:

$$\alpha = l - l_0 / l / t - t_0$$

The value for t is 800°C.

The softening temperature is the value determined in the following manner.

That is, a sample is taken in the same manner described above and the thermal expansion coefficient is measured.

A graph showing the heating temperature and change in sample length is drawn, and the temperature reached upon 20% shrinkage of the sample length from thermal expansion is defined as the softening temperature.

The water absorption is the value determined in the following manner.

That is, the entire ceramic plate obtained upon calcining is carefully sliced under the conditions described above to give a sample of the layer of the calcined sheet to be measured, the sample is dried at 105°C for 3 hours and then cooled to room temperature in a desiccator, the weight ($W_1$) of the sample is taken, and then the sample is immersed in water at room temperature for 24 hours to induce water absorption, after which the surface moisture is wiped off, the weight ($W_2$) is taken, and the following equation:

$$(W_2 - W_1) \times 100/W_2$$

is used to calculate the value for the water absorption.

The thin ceramic plate of the invention is basically a calcined sheet composed of a plurality of the layers described above, and one possible embodiment of the thin ceramic plate of the invention may have a construction wherein the surface is provided with a glazed layer colored with a specific chemical, in order to create an appropriate pattern, or characters, graphics and the like.

The thin ceramic plate of the invention may also have a construction wherein the front layer of the calcined sheet contains a pigment, dye, etc. in its constituent slurry for coloration of the front layer itself of the calcined sheet.

Specifically, the thin ceramic plate of the invention is produced in the following manner.

First, at least 2 types of slurry are prepared containing raw ceramic powder, fiber material and thermoplastic organic materials as essential components.

The raw ceramic material is made into a fine powder of about 200-400 mesh (Tyler screen), water is added to this powder with the fiber material in a prescribed mixing ratio, and then the prescribed amount of the thermoplastic organic material with a glass transition temperature not exceeding 10°C is added, after which a pulper is used for stirring and mixing to prepare a sheet-forming slurry.

The solid component concentration of the slurry is normally adjusted to 0.5 to 10 wt%, and preferably 1 to 5 wt% to allow easier sheet-forming.

The fiber material is used mainly for sheet-forming of the raw ceramic material or to reinforce the strength of the thin ceramic plate, and it may consist of, for example, natural fibers, natural or synthetic pulp, regenerated fibers such as rayon, various organic fiber types such as polyvinyl alcohol-based polymers, polyacrylic-based, polyamide-based and polyester-based fibers, various inorganic fiber types such as glass fibers, ceramic fibers, Rockwell, potassium titanate, and the like. These fibers may also be used in admixture. Inorganic fibers have the effect of preventing shrinkage during calcining and improving the strength of the product because they are not quenched upon calcining.

The thermoplastic organic material is non-fibrous, and it may be any thermoplastic organic polymer with a glass transition point of 10°C or lower, such as a material in latex form, and for example, natural rubber, synthetic rubber, styrene-butadiene copolymer, acrylonitrile-butadiene copolymer, polyacrylic acid ester, polyurethane, polyolefin, polyamide, polyacrylamide, polyvinyl acetate, ethylene-vinyl acetate copolymer, etc. may be used.

These thermoplastic organic materials may be used alone or in combination. The glass transition point may be measured by differential thermal analysis (DTA) or by differential scanning calorimetry (DSC).

The organic material imparts flexibility to the molded sheet obtained by sheet-forming the slurry. In addition, it can promote uniform integration of the molded sheets during the process of laminating the molded sheets and pressure-treating the laminate.

The flexibility of the pressed laminate is improved as a result. Also, by adjusting the content of the thermoplastic organic material and the pressure during the pressure treatment described later, it is possible to adjust the porosity and the water absorption to optimum values as described later.

The mixing ratio of the slurry is determined so as to result in the desired post-calcining thermal expansion coefficient of the molded sheet obtained after sheet-forming, and for this reason there are no particular restrictions; however, normally the fiber material is used at 1-50 parts by weight, preferably 1-10 parts by weight and more preferably 1-5 parts by weight, and the thermoplastic organic material is used at 1-20 parts by weight, and preferably 1-10 parts by weight, with respect to 100 parts by weight of the ceramic material powder.

When the proportion of fiber material is less than one part by weight, sheet-forming of the slurry tends to become more difficult, giving a poorer yield of the molded sheet.

When organic fibers are used as the fiber material in a proportion of greater than 10 parts by weight, loss of the organic fibers by thermal decomposition, during the calcining process described later, results in greater calcining shrinkage of the molded sheet, leading to more warping and other deformation of the completed calcined sheet.

Since there is no loss during the calcining process when inorganic fibers are used as the fiber material, the amount of shrinkage of the molded sheet is minimized, while the flame resistance of the resulting calcined sheet is also increased, helping to bring out the effects of improved strength and resistance to deformation of the thin ceramic plate.

The aforementioned 3 components are the essential components of the slurry, but other chemicals may also be added for improved quality and performance of the completed thin ceramic plate, and smoother flow of the steps of production.

EP 0 757 974 A1

In addition, in order to color the thin ceramic plate to form a pattern for a design effect, a pigment, colored fine particles, natural granite stone fine particles or the like may be added to and dispersed in the slurry.

For production of the thin ceramic plate of the invention, at least 2 types of slurry with different thermal expansion coefficients are prepared.

The slurries may be prepared by modifying the type and particle distribution of the raw ceramic materials, and the slurry compositions.

The prepared slurries are then sheet-formed into molded sheets using a wire-type or cylinder-type sheet-forming machine. The thickness of each of the molded sheets is normally adjusted to be from 0.05 to 3 mm.

The resulting molded sheets are then dried by using, for example, a publicly known roll drier or tunnel drier.

The moisture content of the molded sheets after drying is not especially limited, but the drying conditions are normally set to give a moisture content of 2 wt% or less, and preferably 1 wt% or less, for better handling during the subsequent lamination process, and for improved cohesion between the molded sheets after pressure is applied.

The molded sheets which have undergone the drying process are then laminated into the desired layered structure, and the resulting laminate is subjected to pressure to cause compression and integration of the molded sheets.

If the molded sheets are preheated prior to this pressure treatment, it is possible make a dense, warp-free laminate even with low linear pressure treatment.

In such cases, the molded sheet is preferably heated at a temperature at least 50°C higher than the glass transition point of the thermoplastic organic material contained therein.

It is believed that at such a temperature the thermoplastic organic material is sufficiently softened for increased adhesion, and as a result the cohesion between the molded sheets is satisfactory even at low pressure, and integration of the laminate is thus facilitated.

A flat press or roll press may be used for the pressure application. According to the invention, a roll press is preferred because it applies a uniform and continuous high linear pressure to long molded sheets.

The pressure applied by the roll press is set to at least 100 kg/cm, preferably at least 300 kg/cm and more preferably at least 500 kg/cm, in terms of linear pressure.

The roll press is preferably set to a roll surface temperature of 50°C or higher, with a maximum temperature of 300°C or a temperature at which the organic material does not thermally decompose.

Thus, the molded sheets are used to form a multilayer structure to obtain an integrated laminate.

According to the invention, the porosity of the pressure-treated laminate up to this point in the process is preferably adjusted to within the range of 0.1-0.4, and the water absorption is preferably adjusted to within the range of 10-30%, and especially 15-25%.

As explained above, the laminate porosity and water absorption may be adjusted by appropriate selection of the slurry composition and especially the mixing proportion of the thermoplastic organic material with a glass transition point of no higher than 10°C, as well as the pressure applied to the laminate during pressure treatment.

The porosity of the thin ceramic plate according to the invention is the value calculated from the following formula:

$$1 - [W_0 - V_0]/[W_1 \cdot \rho_1 + W_2 \cdot \rho_2]/W_c$$

where $V_0$ is the volume (cm$^3$) of the laminate after drying at 105°C for 24 hours, $W_0$ is the weight (g) of the laminated after drying at 105°C for 24 hours, $W_1$ is the reduction in weight (g) of the laminate after drying at 400°C for 2 hours, $W_2$ is the residual weight (g) of the laminate after drying at 400°C for 2 hours, $\rho_1$ is the density (g/cm$^3$) of the total organic material contained in the laminate, and $\rho_2$ is the density (g/cm$^3$) of the total inorganic material contained in the laminate.

The water absorption (%) is determined after drying the laminate at 105°C for 2 hours, immersing the dried laminate in water at room temperature for 24 hours to cause water absorption, and then wiping the moisture from the surface, and it is the value calculated from the weights before and after the water absorption test, according to the following formula:

(weight after water absorption test - weight before water absorption test) x 100 / (weight before water absorption test)

Since the laminate used according to the invention contains a relatively large amount of ceramic material and fiber material, together with a prescribed amount of thermoplastic organic material with a glass transition point of no higher than 10°C, the laminate is highly flexible and therefore easy to handle as a whole.

Therefore, the porosity of the laminate is preferably adjusted to between 0.1 and 0.4.

The integrated laminate prepared in this manner is then calcined using a roller-hearth kiln, for example. A roller-hearth kiln is preferably used because it allows uniform, continuous calcining of long laminated sheets in an efficient manner.

In the production process described above, if molded sheets of different colors are prepared with those molded sheets on the surfaces, or if the front and back layers are made of separate colors, then many different design effects may be achieved in the ceramic plate.

By using an embossing roll as the pressure machine in the pressure treatment step to give a desired pattern to the surface, and also applying a glaze sheet or pattern printed film, then even more different types of patterns may be produced in the surface of the ceramic plate.

According to the invention, application of a desired glaze onto the surface after a preliminary calcining at a temperature of, for example, 1000-1350°C followed by further calcining at a temperature of 500-1350°C will allow production of a glazed thin ceramic plate.

In addition, the thin ceramic plate of the invention may be used in combination with a variety of materials suited to the use, such as calcium silicate boards, ALC slabs, concrete slabs, GRC slabs, plaster boards, plywood, wood, stainless steel sheets, steel plates, plastic panels, glass panels, and the like.

The thin ceramic plate of the invention may be applied for a wide gamut of uses, including interior building materials, flooring materials, furniture, boards for wash-stands and kitchen utensils, top plates for testing benches and counters, interior goods, materials for civil engineering such as inner panels for tunnels, and for tourism-related purposes such as guide boards and signboards.

Examples

Examples of thin ceramic plates according to the invention will now be illustrated.

Examples 1-3 and Comparative Examples 1-3

Various slurries were prepared under the conditions described below for embodiments of thin ceramic plates according to the invention.

Specifically, a ceramic powder comprising 65 parts by weight aplite, 15 parts by weight kaolin, 5 parts by weight alumina, 5 parts by weight talc and 10 parts by weight wollastonite was poured into water with 5 parts by weight of krafted pulp as fiber material and 5 parts by weight of styrene-butadiene rubber latex (SBR latex, glass transition point: -20°C) as the thermoplastic organic material, and the mixture was thoroughly stirred to prepare a slurry (A) with a solid concentration of 2 wt%.

Also, a ceramic powder comprising 60 parts by weight aplite, 15 parts by weight kaolin, 10 parts by weight alumina, 5 parts by weight talc and 10 parts by weight wollastonite was poured into water with 5 parts by weight of krafted pulp as fiber material and 5 parts by weight of styrene-butadiene rubber latex (SBR latex, glass transition point: -20°C) as the thermoplastic organic material, and the mixture was thoroughly stirred to prepare a slurry (B) with a solid concentration of 2 wt%.

In addition, a ceramic powder comprising 55 parts by weight aplite, 15 parts by weight kaolin, 20 parts by weight alumina, 5 parts by weight talc and 10 parts by weight wollastonite was poured into water with 5 parts by weight of krafted pulp as fiber material and 5 parts by weight of styrene-butadiene rubber latex (SBR latex, glass transition point: -20°C) as the thermoplastic organic material, and the mixture was thoroughly stirred to prepare a slurry (C) with a solid concentration of 2 wt%.

A wire-type sheet-forming machine was used to prepare 120 cm-wide endless sheets from each of the slurries (A), (B) and (C), and each sheet was also passed through a multidrum drier to produce molded sheet (A), molded sheet (B) and molded sheet (C), each adjusted to a moisture content of 0.5 wt%.

The thicknesses of the molded sheets (A), (B) and (C) were all adjusted to 1.6 mm.

The molded sheets (A), (B) and (C) were then laminated into the structural orders listed in Table 1 to prepare 5-layered laminates, after which the laminates were pressure-treated through an oil-pressure calender roll at a linear pressure of 350 kg/cm.

The pressure-treated laminates were cut along their length to obtain pressure-integrated laminates 3 m long, 1.2 m wide and about 5 mm thick. The porosity and water absorption of the pressure-integrated laminates were measured according to the measuring methods described above, and the results are shown in Table 1.

Also, the peak sintering temperatures of the molded sheets (A), (B) and (C) were 1175°C, 1210°C and 1225°C, respectively, and the softening temperatures of the molded sheets (A), (B) and (C) were 930°C, 1110°C and 1225°C, respectively.

These pressure-integrated laminates were then calcined with a roller-hearth kiln at a maximum calcining temperature of 1180°C for a calcining time of 40 minutes, and the 5-layer ceramic plates comprised integrated laminates of calcined sheet (A) resulting from calcining molded sheet (A), calcined sheet (B) resulting from calcining molded sheet (B) and calcined sheet (C) resulting from calcining molded sheet (C).

That is, Examples 1 to 3 of the invention were constructed from combinations of molded sheets (A), (B) and (C) as shown in Table 1, while Comparative Example 1 against the thin ceramic plates of the invention was formed as a calcined ceramic plate consisting of 5 layers of a combination of molded sheets (A) and (C), as shown in Table 1, and Comparative Examples 2 and 3 were produced as calcined ceramic plates consisting of 5-layer structures of either molded sheet (A) or (B) alone.

The thermal expansion coefficients and water absorption rates of calcined sheet (A), calcined sheet (B) and calcined sheet (C) in the resulting ceramic plates were measured. In addition, the flexural strength, Charpy impact strength and drop impact test values were measured according to JIS A5209, JIS K7111 and JIS A1408, respectively, and the degrees of warping, deformation and wavy irregularity of the ceramic plates were evaluated on a 5-level scale (with 5 as optimum).

The degree of contamination upon horizontal exposure of the surfaces for 6 months was also evaluated on a 5-level scale (with 5 as optimum), using the side of the calcined ceramic plate with the lower water absorption as the front and the side with the higher water absorption as the back.

The adhesion of the back side was also evaluated according to the method specified by JIS A5548 (using a mortar adhesive).

These results are summarized in Table 1.

Table 1

| | | Example 1 | Example 2 | Example 3 | Comp. Ex. 1 | Comp. Ex. 2 | Comp. Ex. 3 |
|---|---|---|---|---|---|---|---|
| Pressure-treated laminate | Layered structure of molded sheet | A/B/A/B/B | A/B/A/B/A | A/B/C/B/A | A/C/A/C/A | A/A/A/A/A | B/B/B/B/B |
| | Porosity | 0.19 | 0.18 | 0.18 | 0.18 | 0.19 | 0.18 |
| | Water absorption (%) | 17.6 | 17.4 | 17.5 | 17.7 | 17.7 | 17.4 |
| Ceramic plate | Thickness (mm) Calcined sheet (A) | 1.1 | 1.1 | 1.1 | 1.2 | 1.1 | -- |
| | Thickness (mm) Calcined sheet (B) | 1.1 | -- | 1.1 | -- | -- | 1.2 |
| | Thickness (mm) Calcined sheet (C) | -- | -- | 1.1 | 1.2 | -- | -- |
| | Water absorption (%) Calcined sheet (A) | 0.1 | 0.1 | 0.1 | 0.1 | 0.1 | -- |
| | Water absorption (%) Calcined sheet (B) | 3.4 | 3.5 | 3.3 | -- | -- | -- |
| | Water absorption (%) Calcined sheet (C) | -- | -- | 7.6 | 7.5 | -- | 7.6 |
| | Thermal expansion coefficient (1/°C x 10⁻⁶) Calcined sheet (A) | 5.2 | 5.1 | 5.2 | 5.1 | 5.1 | -- |
| | Thermal expansion coefficient (1/°C x 10⁻⁶) Calcined sheet (B) | 6.0 | 6.0 | 6.1 | -- | -- | 6.0 |
| | Thermal expansion coefficient (1/°C x 10⁻⁶) Calcined sheet (C) | -- | -- | 7.5 | 7.5 | -- | -- |
| | Difference (A-B) | 0.8 | 0.9 | 0.9 | -- | -- | -- |
| | Difference (B-C) | -- | -- | 1.4 | -- | -- | -- |
| | Difference (A-C) | -- | -- | -- | 2.4 | -- | -- |
| | Thickness (mm) | 4.6 | 4.5 | 4.7 | 4.5 | 4.5 | 4.6 |
| | Water absorption (%) | 2.5 | 2.3 | 3.1 | 2.9 | 0.1 | 3.5 |
| | Thermal expansion coeff. (1/°C x 10⁻⁶) | 5.3 | 5.4 | 5.5 | 6.3 | 5.1 | 6.0 |
| | Warping, deformity (scaled) | 5 | 5 | 5 | 3 | 5 | 5 |
| | Wavy irregularities (scaled) | 5 | 5 | 5 | 5 | 2 | 5 |
| | Flexural strength (kg/cm²) | 650 | 670 | 770 | 350 | 465 | 280 |
| | Charpy impact (kg·cm/cm²) | 2.1 | 2.1 | 2.3 | 1.4 | 1.3 | 1.4 |
| | Drop impact value (cm) | 55 | 50 | 50 | 25 | 30 | 25 |
| | Surface contamination (class) | 5 | 5 | 5 | 5 | 5 | 2 |
| | Adhesive strength (kg/cm²) | 5.3 | 2.4 | 2.5 | 2.5 | 2.5 | 5.5 |

As clearly shown by the data in Table 1, the ceramic plates according to the invention which had differences of less than 2 x 10⁻⁶/°C between the thermal expansion coefficients of the respective calcined sheets had no warping or deformities, and superior flatness. The flexural strengths and impact resistances were also superior to those of the comparative examples.

It is also clear that Example 2 which was prepared so that the front layer and back layer had different water absorp-

13

tion rates, was superior in overall terms to the comparative examples, as evidenced by achieving both contamination resistance of the front and adhesion of the back.

Comparative Example 4

A ceramic plate was produced under the same conditions as Example 1, except that the thickness of molded sheets (A) and (B) of Example 1 were adjusted to 0.04 mm, and 20 alternate layers were laminated.

The cross-section of the resulting ceramic plate was observed, but the boundaries were unclear making it impossible to distinguish the layers.

Comparative Example 5

A ceramic plate was produced under the same conditions as Example 1, except that the thickness of molded sheet (A) of Example 1 was adjusted to 0.5 mm and the thickness of molded sheet (B) was adjusted to 3.2 mm, and a 5-layer structure A/B/A/B/A was laminated.

The resulting ceramic plate exhibited partial interlayer peeling, and warping and deformities were observed.

Examples 4-6

Ceramic plates were produced under the same conditions as Example 1, except that the thicknesses of molded sheets (A) and (B) of Example 2 and the number of laminated layers were varied.

As the data in Table 2 clearly shows, greater numbers of layers of calcined sheets resulted in improved impact resistance.

Table 2

| | | | Ex. 4 | Ex. 5 | Ex. 6 |
|---|---|---|---|---|---|
| Thickness of molded sheet (A), (B) (mm) | | | 1.2 | 0.8 | 0.5 |
| | Number of layers | | 7 | 10 | 15 |
| | Porosity | | 0.22 | 0.21 | 0.20 |
| | Water absorption (%) | | 18.3 | 18.5 | 18.7 |
| Ceramic plate | Thermal expansion coeff. (1/°C x 10$^{-6}$) | Calcined sheet (A) | 5.5 | 5.4 | 5.5 |
| | | Calcined sheet (B) | 6.3 | 6.4 | 6.4 |
| | | Difference | 0.8 | 1.0 | 0.9 |
| | Thickness (mm) | | 5.5 | 5.6 | 5.3 |
| | Warping/deformity (scaled) | | 5 | 5 | 5 |
| | Flexural strength (kg/cm$^2$) | | 760 | 785 | 800 |
| | Charpy impact value (kg $\cdot$ cm/cm$^2$) | | 2.2 | 2.5 | 2.6 |
| | Drop impact value (cm) | | 55 | 70 | 80 |

Example 7 and Comparative Example 6

Ceramic plates were produced under the same conditions as Example 1, except that the SBR latex contents were changed, the molded sheets were preheated by passing through a hot air furnace set to an internal temperature of 140°C, and the calender roll temperature and linear pressure were changed as shown in Table 3, after which the characteristics were evaluated.

As the results in Table 3 clearly show, setting appropriate values for the porosity and water absorption of the pressure-treated laminates gives vastly improved strength as well as a smoother ceramic plate surface and lack of warping, etc. In addition, the molded sheets are preferably pressure-treated after preheating since a similar effect is achieved even with a low linear pressure.

Table 3

| | | Example 7 | Comp. Ex. 6 |
|---|---|---|---|
| SBR rubber latex content | | 5 | 0 |
| Molded sheet preheating temp. (°C) | | 130 | 130 |
| Calender roll surface temp. (°C) | | 100 | 100 |
| Calender roll linear pressure (kg/cm$^2$) | | 140 | 140 |
| Pressure-treated laminate | Porosity | 0.15 | 0.45 |
| | Water absorption (%) | 45.7 | 54.7 |
| Warping/deformity (scaled) | | 3 | 3 |
| Flexural strength (kg/cm$^2$) | | 782 | 365 |
| Charpy impact value (kg・cm/cm$^2$) | | 2.3 | 1.5 |
| Drop impact value (cm) | | 55 | 30 |

Example 8

A ceramic plate was produced in the same manner as Example 1, except that as slurry (A) of Example 1 there was used a slurry with 2 parts by weight of a dissolved red pigment and white, black and red pigments dispersed therein in a scale-like manner before sheet-forming. The surface of the resulting ceramic plate had a granite-like design with a green background bearing dispersed spots of white, black and green, while the flexural strength was 700 kg/cm$^2$, the drop impact value was 45 cm, and the front contamination, back adhesion and freezing thaw resistance were of the same levels as in Example 1, rendering the plate suitable as an interior or exterior material for architecture.

Example 9

The ceramic plate of Example 2 was subjected to glaze working, painting with an ink jet system, decoration by screen printing, etc.
In all cases, the state of glaze or pigment ink suction was satisfactory, allowing formation of the desired design on the back.
It was therefore suitable for uses requiring durability, such as outside guide boards, signboards, artistic paintings and the like.

Example 10

A ceramic plate was produced in the same manner as Example 1, except that to slurry (A) of Example 1 there were further added 5 parts each of a black mat pigment and a white glossy pigment before sheet-forming to make the molded sheet, and these were used as the front constituent layers.
The black mat ceramic plate had a dense, non-absorbent front, rendering it suitable for experiment benches and table tops which especially require heat resistance, chemical resistance and abrasion damage resistance.
The white glossy ceramic plate was resistant to contamination, and was therefore suitable as an inner tunnel panel in light of its easy cleaning and maintenance properties and high strength.

**Claims**

1. A thin ceramic plate which is a ceramic plate consisting of a multilayered calcined sheet with at least a 3-layer construction comprising a ceramic material as the major component, wherein said ceramic plate has a water absorption of 0.5-10%, a longitudinal flexural strength of 350 kg/cm$^2$ or greater and a lateral flexural strength of 350 kg/cm$^2$ or greater, with the majority of the layers of the layered construction having a layer thickness of 0.05-3 mm and having substantially different ceramic material compositions, and the adjacent layers of the multiple layer construction having thermal expansion coefficients which differ by less than 2 x 10$^{-6}$/°C.

2. A thin ceramic plate according to claim 1, wherein the entire thickness is 2-10 mm.

3. A thin ceramic plate according to claim 1 or claim 2, wherein the thermal expansion coefficient of the entire ceramic plate is less than $7 \times 10^{-6}/°C$.

4. A thin ceramic plate according to any of claims 1 to 3, wherein the thermal expansion coefficient of at least one of the surface constituent layers is smaller than the thermal expansion coefficient of the constituent layer adjacent to the inner side of said surface constituent layer.

5. A thin ceramic plate according to any of claims 1 to 4, which has at least 4 laminated constituent layers.

6. A thin ceramic plate according to any of claims 1 to 5, wherein the water absorption of at least one surface constituent layer is less than 1%, and the water absorption of the other surface constituent layer is at least 2%.

7. A thin ceramic plate according to any of claims 1 to 6, wherein the difference between the softening temperature of one surface constituent layer and the softening temperature of the other surface constituent layer is between 10°C and 300°C.

8. A thin ceramic plate according to any of claims 1 to 7, wherein the softening temperature of at least one surface constituent layer is lower than the softening temperature of the constituent layer adjacent to the inner side of said surface constituent layer.

9. A thin ceramic plate according to any of claims 1 to 8, wherein the thickness of at least one surface constituent layer is at least 0.3 mm.

10. A thin ceramic plate according to any of claims 1 to 9, wherein a coloring agent is added to at least one surface constituent layer.

11. A thin ceramic plate according to any of claims 1 to 10, which is a rectangle with a length of at least 60 cm on one side.

12. A thin ceramic plate according to any of claims 1 to 11, wherein a glazed layer is provided on the outer side of at least one surface constituent layer of the thin ceramic plate.

13. A thin ceramic plate according to any of claims 1 to 12, which is used as an architectural wall material.

14. A thin ceramic plate according to any of claims 1 to 12, which is used as a civil engineering wall material.

15. A thin ceramic plate according to any of claims 1 to 12, which is used as a furniture material.

16. A thin ceramic plate according to any of claims 1 to 12, which is used as a signboard.

17. A process for producing a thin ceramic plate comprising the following 4 steps (a) through (d):

(a) a step of combining a raw ceramic powder, a fiber material and a thermoplastic organic material with a glass transition point not exceeding 10°C, and preparing at least 2 different types of slurry to form multiple layers in the ceramic plate obtained in step (d) described below, with substantially different ceramic material compositions and thermal expansion coefficients which differ by less than $2 \times 10^{-6}/°C$,
(b) a step of sheet-forming each of the slurries obtained in step (a) above to make molded sheets,
(c) a step of laminating the multiple molded sheets obtained in step (b) to make a pressure-integrated multilayer structure with at least 3 layers, and
(d) a step of calcining the pressure-integrated multilayer structure obtained in step (c) to make a ceramic plate.

18. The process for producing a thin ceramic plate according to claim 17, wherein at least 2 layers of the pressure-integrated multilayer structure introduced in step (d) have different sintering peak temperatures, and the calcining in step (d) is conducted under temperature conditions higher than the lower sintering peak temperature and lower than the higher sintering peak temperature.

19. The process for producing a thin ceramic plate according to claim 17 or 18, wherein at least 2 layers of the pressure-integrated multilayer structure introduced in step (d) have different sintering peak temperatures, and the calcining temperature in step (d) is adjusted to be within a range higher than the lower sintering peak temperature and lower than the higher sintering peak temperature, to produce a thin ceramic plate having multiple constituent layers whose physical properties such as strength and density differ as desired.

20. The process for producing a thin ceramic plate according to any of claims 17 to 19, wherein the slurries used contain 1-50 parts by weight of a fiber material and 1-25 parts by weight of a thermoplastic organic material with a glass transition point of no higher than 10°C, with respect to 100 parts by weight of the raw ceramic powder.

21. The process for producing a thin ceramic plate according to claim 20, wherein the slurries used contain 1-10 parts by weight of a fiber material and 1-15 parts by weight of a thermoplastic organic material with a glass transition point of no higher than 10°C, with respect to 100 parts by weight of the raw ceramic powder.

22. The process for producing a thin ceramic plate according to any of claims 17 to 21, wherein step (c) includes a step of heating a plurality of the molded sheets obtained in step (b) at a temperature of 50°C or above, and then stacking said plurality of molded sheets and passing them through a pressure roll to make a pressure-integrated multilayer structure.

23. The process for producing a thin ceramic plate according to any of claims 17 to 22, wherein step (c) employs a pressure roll to make the pressure-integrated multilayer structure, and said pressure roll has a surface temperature of 50-300°C.

24. The process for producing a thin ceramic plate according to any of claims 17 to 23, wherein the calcining of step (d) is performed using a roller-hearth kiln at a calcining temperature of 1000-1350°C.

EP 0 757 974 A1

| INTERNATIONAL SEARCH REPORT | International application No. |
|---|---|
| | PCT/JP95/00299 |

**A. CLASSIFICATION OF SUBJECT MATTER**

Int. Cl$^6$  C04B33/02, B32B18/00

According to International Patent Classification (IPC) or to both national classification and IPC

**B. FIELDS SEARCHED**

Minimum documentation searched (classification system followed by classification symbols)

Int. Cl$^6$  C04B33/32, 33/36, B32B18/00

Documentation searched other than minimum documentation to the extent that such documents are included in the fields searched

Jitsuyo Shinan Koho          1926 - 1995
Kokai Jitsuyo Shinan Koho    1971 - 1995

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 6-144914, A (Oribest K.K.),<br>May 24, 1994 (24. 05. 94),<br>Abstract, claim, example, talbes 1, 2<br>(Family: none) | 1, 2,<br>17 |
| A | | 1 - 16,<br>17 - 24 |
| Y | JP, 5-82294, B2 (National House Industrial Co.,<br>Ltd.),<br>November 18, 1993 (18. 11. 93),<br>Claim, Fig. 1 & JP, 62-282925, A<br>& JP, 6-166141, A | 1, 2,<br>17 |
| A | | 1 - 16,<br>17.- 24 |
| Y | JP, 1-106599, U (Tanaka Seishi Kogyo K.K.),<br>July 18, 1989 (18. 07. 89),<br>Claim, examples 2, 3 (Family: none) | 1, 2,<br>17 |
| A | | 1 - 16,<br>17 - 24 |

[X] Further documents are listed in the continuation of Box C.     [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| May 19, 1995 (19. 05. 95) | May 30, 1995 (30. 05. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)

18

**INTERNATIONAL SEARCH REPORT**

International application No.

PCT/JP95/00299

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 4-16664, A (Shinnippon Kagaku Kogyo K.K.), January 21, 1992 (21. 01. 92), Claim, table 1 (Family: none) | 1, 3, 4, 6 |
| A | JP, 60-3038, B2 (Tomoegawa Paper Co., Ltd.), January 25, 1985 (25. 01. 85), Claim, Fig. 2 & JP, 55-37440, A | 10, 12, 23 |
| A | JP, 51-15847, B2 (Nissan Motor Co., Ltd.), May 20, 1976 (20. 05. 76), Claim, table, lines 12 to 42, column 3, page 2 & JP, 48-66112, A | 17, 20, 21 |

Form PCT/ISA/210 (continuation of second sheet) (July 1992)